# EUROPEAN PATENT APPLICATION

(11) **EP 4 518 200 A1**
(43) Date of publication of application: **05.03.2025**
(21) Application number: 23814892.8
(22) Date of filing: 06.05.2023
(51) Int. Cl.: H04B 17/391

(54) **DATA CHANNEL MODEL SENDING METHOD AND APPARATUS, AND INFORMATION SENDING METHOD AND APPARATUS**

(30) Priority: 31.05.2022 CN 202210609718
(71) Applicant: ZTE Corporation, Shenzhen, Guangdong 518057 (CN)
(72) Inventor: LU, Zhaohua, Shenzhen, Guangdong 518057 (CN); LIU, Kun, Shenzhen, Guangdong 518057 (CN); ZHENG, Guozeng, Shenzhen, Guangdong 518057 (CN); XIAO, Huahua, Shenzhen, Guangdong 518057 (CN)
(74) Representative: Pennacchio, Salvatore Giovanni
(86) International application number: PCT/CN2023/092590
(87) International publication number: WO 2023/231706

(57) **Abstract**

Examples of the disclosure provide a method and apparatus for transmitting a data channel model, and a method and apparatus for transmitting information. The method for transmitting a data channel model includes: receiving, by a first node, data transmission requirement information transmitted from a second node; determining, by the first node, a data channel model matching the data transmission requirement information at least according to the data transmission requirement information; and transmitting the data channel model matching the second node to the second node.

## Description

### Technical Field

The disclosure relates to the field of communication, particularly a method and apparatus for transmitting a data channel model, and a method and apparatus for transmitting information.

### Background

Currently, in a new radio (NR) of a 5th-generation mobile communication system (5G), system information is transmitted to a master information block (MIB) through a physical broadcast channel (PBCH) in a single sideband (SSB), and then carried in a system information block (SIB) through a physical downlink shared channel (PDSCH). The SIB can be divided into blocks to carry different system information.

As for a 6th-generation mobile communication system (6G), typical application scenarios such as smart city, smart transportation and smart home will emerge. A large number of intelligent automation devices with highly differentiated capabilities exist in 6G application scenarios, so the communication need for extremely low latency, extremely high reliability, ultra-large bandwidth, and massive access grows. In other words, the terminals that access the system in the 6G era will become highly varied. This results in two problems. On the one hand, the surge in the number of radio communication and sensing devices intensifies the contradiction between the endless growth of service demand and the limited radio resources and arithmetic power. On the other hand, realization of the 6G requires closed-loop information flow processing through obtainment of environmental sensing information, information interaction and sharing, intelligent information processing, and layer-by-layer distribution of control information (including control information for a communication network and control commands for an application execution device), but such a requirement cannot be satisfied in the prior art. It can be seen that the existing radio network architecture and related technologies can hardly satisfy the emerging application demands in the 5G and Beyond (B5G)/6G era. If a data channel generation method with a limited number of combinations of NRs continues to be used, the data transmission efficiency of the terminals will be greatly limited, and the system spectral efficiency will also be affected.

Therefore, there is an urgent need for a terminal type-oriented data channel generation method to satisfy data transmission requirements of different types of UEs and improve spectral efficiency, but the prior art lacks a data channel generation method for different terminal types.

No effective solution has been proposed to solve the problem that the data transmission efficiency of the terminals is limited because the prior art lacks a data channel model generation method for different terminal types.

Therefore, it is a pressing issue to improve the related art, so as to overcome relevant defects in the related art.

### Summary

Examples of the disclosure provide a method and apparatus for transmitting a data channel model, and a method and apparatus for transmitting information, such that the problem that data transmission efficiency of the terminal is limited because the prior art lacks a data channel model generation method for different terminal types is at least solved.

According to an aspect of the examples of the disclosure, a method for transmitting a data channel model is provided. The method for transmitting a data channel model includes: receiving, by a first node, data transmission requirement information transmitted from a second node; determining, by the first node, a data channel model matching the data transmission requirement information at least according to the data transmission requirement information; and transmitting the data channel model matching the second node to the second node.

According to an example of the disclosure, a method for receiving a data channel model is provided. The method for receiving a data channel model includes: transmitting, by a second node, data transmission requirement information to a first node; and receiving, by the second node, data channel model information determined at least according to the data transmission requirement information transmitted from the first node, and obtaining, from the data channel model information, at least one of the following: N functional modules, and configuration information of M functional modules, where N or M are integers greater than or equal to 1.

According to an example of the disclosure, a method for transmitting information is provided. The method for transmitting information includes: receiving, by a second node, a first type of control information transmitted from a first node, where the first type of control information is configured to indicate a data channel generation mode; where the data channel generation mode includes at least one of the following: a stored first data channel generation mode; or a second data channel generation mode for determining a data channel by means of a data channel model; where the data channel model is determined in the following manners: data transmission requirement information transmitted from the second node is received by the first node; and the data channel model matching the data transmission requirement information is determined at least according to the data transmission requirement information.

According to an example of the disclosure, an apparatus for transmitting a data channel model is provided. The apparatus for transmitting a data channel model is applied to a first node and includes: a first reception module configured to receive data transmission requirement information transmitted from a second node; a calculation module configured to determine a data channel model matching the data transmission requirement information at least according to the data transmission requirement information; and a first transmission module configured to transmit the data channel model matching the second node to the second node.

According to an example of the disclosure, an apparatus for receiving a data channel model is provided. The apparatus for receiving a data channel model is applied to a second node and includes: a second transmission module configured to transmit data transmission requirement information to a first node; and a second reception module configured to receive the data channel model determined according to the data transmission requirement information transmitted from the first node, and obtain, from the data channel model, at least one of the following: N functional modules in data transmission, or configuration information of M functional modules in data transmission.

According to an example of the disclosure, an apparatus for transmitting information is provided. The apparatus for transmitting information includes: a third reception module configured to receive a first type of control information transmitted from a first node, where the first type of control information is configured to indicate a data channel generation mode; where the data channel generation mode includes at least one of the following: a stored first data channel generation mode; or a second data channel generation mode for determining a data channel by means of a data channel model; where the data channel model is determined in the following manners: data transmission requirement information transmitted from the second node is received by the first node; and the data channel model matching the data transmission requirement information is determined at least according to the data transmission requirement information.

According to another example of the disclosure, a computer-readable storage medium is further provided. The computer-readable storage medium stores a computer program, where the computer program is configured to, when executed by a processor, implement steps of any one of the above method examples.

According to yet another example of the disclosure, an electronic apparatus is further provided. The electronic apparatus includes a memory and a processor, where the memory stores a computer program, and the processor is configured to execute the computer program to implement steps of any one of the above method examples when running the computer program.

Through the disclosure, the data transmission requirement information transmitted from the second node is received by the first node; the data channel model matching the data transmission requirement information is determined at least according to the data transmission requirement information by the first node, and the data channel model matching the second node is transmitted to the second node. In the disclosure, since the first node may be a network side, and the second node may be a terminal, etc., the disclosure determines the corresponding data channel model according to the data transmission requirement information of the terminal, and transmits the data channel model to the terminal. Therefore, the data channel model corresponding to the terminal can be determined according to requirements of different types of terminals, such that the problem that data transmission efficiency of the terminal is limited because the prior art lacks a data channel model generation method for different types of terminals is solved.

### Brief Description of the Drawings

Fig. 1 is a structural block diagram of hardware of a computer terminal of an optional method for transmitting a data channel model according to an example of the disclosure;
Fig. 2 is a flowchart of an optional method for transmitting a data channel model according to an example of the disclosure;
Fig. 3 is a schematic diagram of an optional data channel model matching a second node according to an example of the disclosure;
Fig. 4 is a flowchart of an optional method for receiving a data channel model according to an example of the disclosure;
Fig. 5 is a schematic diagram of composition of functional modules in an optional data transmission process according to an example of the disclosure;
Fig. 6 is a schematic diagram of an optional method for transmitting a data channel model according to Example 1;
Fig. 7 is a schematic diagram of an optional method for transmitting a data channel model according to Example 2;
Fig. 8 is a schematic diagram of an optional method for transmitting a data channel model according to Example 3;
Fig. 9 is a schematic diagram of an optional method for transmitting a data channel model according to Example 4;
Fig. 10 is a flowchart of an optional method for transmitting information according to an example of the disclosure;
Fig. 11 is a first schematic diagram of an optional frame structure according to an example of the disclosure;
Fig. 12 is a second schematic diagram of an optional frame structure according to an example of the disclosure;
Fig. 13 is a structural block diagram of an optional apparatus for transmitting a data channel model according to an example of the disclosure;
Fig. 14 is a structural block diagram of an optional apparatus for receiving a data channel model according to an example of the disclosure; and
Fig. 15 is a structural block diagram of an optional apparatus for transmitting information according to an example of the disclosure.

### Detailed Description of the Embodiments

In order to enable those skilled in the art to better understand solutions of the disclosure, the technical solutions in the examples of the disclosure will be clearly and comprehensively described below in conjunction with the accompanying drawings in the examples of the disclosure. Apparently, the examples described are merely some examples rather than all examples of the disclosure. Based on the examples of the disclosure, all other examples derived by those of ordinary skill in the art without creative efforts should fall within the scope of protection of the disclosure.

It should be noted that the terms "first", "second", etc. in the description, the claims, and the above accompanying drawings of the disclosure are used to distinguish between similar objects, instead of necessarily describing a specific sequence or a successive order. It should be understood that data used in such a way can be interchanged where appropriate, so that the examples of the disclosure described herein may be implemented in other orders than those illustrated or described herein. Furthermore, the terms "comprise", "include", "have", and any variations thereof are intended to cover non-exclusive inclusions. For example, a process, a method, a system, a product, or a device that includes a series of steps or units is not necessarily limited to those explicitly listed steps or units, but may include other steps or units not explicitly listed or inherent to the process, method, product, or device.

In order to better understand the following technical solutions, the related art of the disclosure will be described below:
Large-scale commercialization of a 5th generation mobile communication system (5G) new radio (NR) is accelerating transformation of the economic society to digitalization, networking and intelligence, and promoting networks to a new era of Internet of Everything. Rapidly emerging application requirements of smart cities, smart transportation, smart industrial production, etc., continue to strengthen a development trend of network apparatus capability differentiation, network function diversification, and network management and control intelligence, and further promote the arrival of the 6th generation mobile communication system (6G) of the Internet of Everything. A large number of intelligent automation devices with highly differentiated capabilities exist in 6G typical application scenarios represented by smart city, smart transportation and smart home, such that the communication need for extremely low latency, extremely high reliability, ultra-large bandwidth, and massive access becomes more stringent, and intelligent automation applications also require high precision and high resolution for sensing capability. On the one hand, the surge in the number of radio communication and sensing devices intensifies the contradiction between the endless growth of service demand and the limited radio resources and arithmetic power. On the other hand, realization of the 6G requires closed-loop information flow processing through obtainment of environmental sensing information, information interaction and sharing, intelligent information processing, and layer-by-layer distribution of control information (including control information for a communication network and control commands for an application execution device). The existing radio network architecture and related art can hardly satisfy the emerging application requirements in the 5G and beyond (B5G)/6G era, and it is urgent to develop new network architecture and enabling technology with efficient utilization of resources and intelligent adaptation to differentiated applications.

The rise of artificial intelligence (AI) technology represented by deep learning, reinforcement learning and distributed learning has exerted extensive and profound influence on various fields such as communication network optimization, intelligent perception and control applications, and greatly promotes possibility of deep integration of communication-perception-computing field. In view of this, in a case that 6G realizes fusion and symbiosis of a communication ability and a perception ability under power of the intelligent computing technology, it will endow 6G network with the ability to intelligently perceive a physical world and mirror a digital world all the time and everywhere. The connected mass of new intelligent terminals rely on increasing computing power for learning, communication, cooperation and competition, so as to implement self-learning, self-operation and self-maintenance of the network, and then realize a 6G communication-perception-computing integrated network.

Introduction of artificial intelligence (AI)/machine learning (ML) into a radio communication system has been widely accepted. For example, research contents include, but are not limited to, customer satisfaction index (CSI) feedback, beam management, channel estimation, positioning, interference management, user scheduling, etc.

In some examples, the artificial intelligence (AI) includes machine learning (ML), deep learning, reinforcement learning, transfer learning, deep reinforcement learning, meta-learning, and other devices, components, software, and modules capable of self-learning. In some examples, the artificial intelligence is realized by an artificial intelligence network (or neural network). The neural network includes a plurality of layers, and each layer includes at least one node. In one example, the neural network includes an input layer, an output layer, and at least one hidden layer. Each layer of the neural network includes, but is not limited to, at least one of a fully connected layer, a dense layer, a convolutional layer, a transposed convolutional layer, a directly connected layer, an activation function, a normalized layer, a pooling layer, etc. In some examples, each layer of the neural network may include a neural sub-network, such as a residual network block (or resnet block), a dense network (densenet block), a recurrent neural network (RNN), etc. The artificial intelligence network includes a neural network model and/or neural network parameters corresponding to a neural network model. The neural network model may be referred to as a network model for short. The neural network parameters may be referred to as network parameters for short. One network model defines a number of layers of the neural network, a size of each layer, an activation function, a link condition, a convolution kernel and a convolution step size, a convolution type (such as 1D convolution, 2D convolution, 3D convolution, hollow convolution, transposed convolution, separable convolution, grouped convolution, extended convolution, etc.), and other network architectures. The network parameters are weights and/or biases of each layer of the network model and their values. One neural network model can correspond to different sets of neural network parameters to adapt to different scenarios. The values of the network parameters can be obtained by means of offline training and/or online training. One neural network model can correspond to different neural network parameter values.

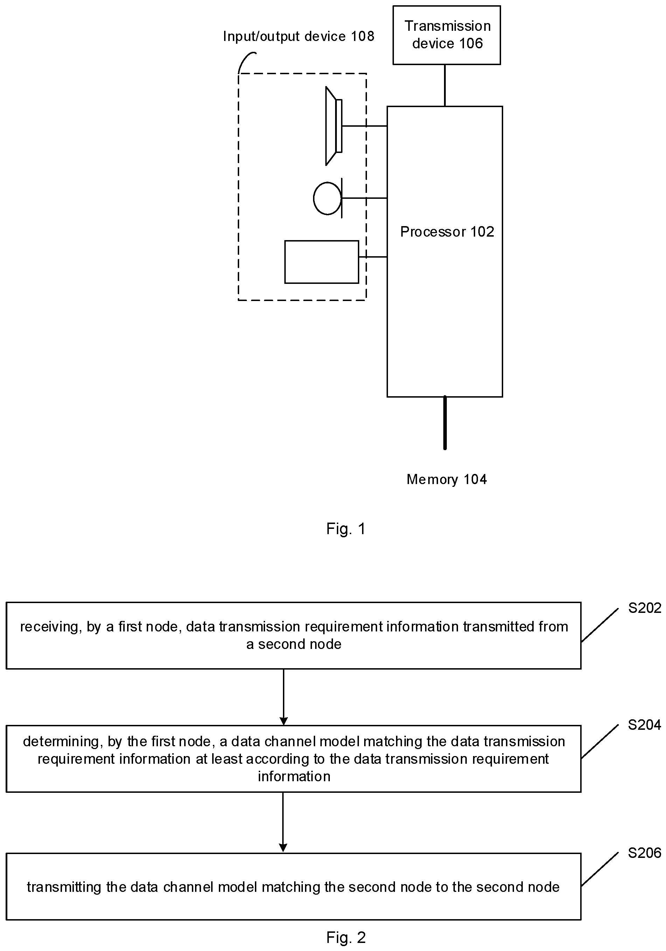

A method example according to the example of the disclosure may be executed in a computer terminal, etc. With running on the computer terminal as an instance, Fig. 1 is a structural block diagram of hardware of a computer terminal of an optional method for transmitting data in an example of the disclosure. As shown in Fig. 1, the computer terminal may include one or more processors 103 (only one processor is shown in Fig. 1) and a memory 104 configured to store data, where the processor 103 may include, but is not limited to, a microprocessor unit (MPU) or a programmable logic device (PLD). In an illustrative example, the computer terminal may further include a transmission device 106 configured for a communication function and an input/output device 108. Those of ordinary skill in the art can understand that the structure shown in Fig. 1 is merely illustrative and is not intended to limit the structure of the computer terminal. For example, the computer terminal may further include more or fewer components than those shown in Fig. 1 or have different configurations with equivalent functions or more functions compared to those shown in Fig. 1.

The memory 104 may be configured to store a computer program, for example, a software program and a module of application software such as a computer program corresponding to the method for transmitting data in the example of the disclosure. The processor 103 executes various function applications and data processing by running the computer program stored in the memory 104, so as to realize the method. The memory 104 may include a high-speed random access memory, and may further include a non-volatile memory, such as one or more magnetic storage apparatuses, flash memories, or other non-volatile solid-state memories. In some instances, the memory 104 may further include memories remotely configured relative to the processor 103. These remote memories may be connected to the computer terminal through a network. The instances of the network include, but are not limited to, the Internet, an intranet, a local area network, a mobile communication network, and their combinations.

The transmission device 106 is configured to receive or transmit data via one network. The specific instances of the network may include a radio network provided by a communication provider of the computer terminal. In an instance, the transmission device 106 includes a network interface controller (NIC), which may be connected to other network devices through a base station to communicate with the Internet. In an instance, the transmission device 106 may be a radio frequency (RF) module, which is configured to communicate with the Internet wirelessly.

Fig. 2 is a flowchart of an optional method for transmitting a data channel model according to an example of the disclosure. As shown in Fig. 2, the method for transmitting data includes:
S202, data transmission requirement information transmitted from a second node is received by a first node;
S204, a data channel model matching the data transmission requirement information is determined at least according to the data transmission requirement information by the first node; and
S206, the data channel model matching the second node is transmitted to the second node.

Through the above steps, the data transmission requirement information transmitted from the second node is received by the first node; the data channel model matching the data transmission requirement information is determined at least according to the data transmission requirement information by the first node, and the data channel model matching the second node is transmitted to the second node. In the above steps, since the first node may be a network side, and the second node may be a terminal, etc., the corresponding data channel model is determined according to the data transmission requirement information of the terminal, and transmits the data channel model to the terminal. Therefore, the data channel model corresponding to the terminal can be determined according to requirements of different types of terminals, such that the problem that data transmission efficiency of the terminal is limited because the prior art lacks a data channel model generation method for different types of terminals is solved.

It should be noted that the first node may be a network side, and further, the network side may generate the data channel model matching the data transmission requirement information by analyzing and calculating the data transmission requirement information. Alternatively, the network side may find the data channel model matching the data transmission requirement information in a local database by analyzing and calculating the data transmission requirement information.

In an optional example, the data channel model may be understood as a collection of information for generating the data channel. The information includes at least one of the following: parameters for generating the data channel; software for generating the data channel; hardware for generating the data channel; structural configuration for generating the data channel; data composition information carried on the data channel; a method for transmitting data carried on the data channel; or a method for receiving data carried on the data channel.

It should be noted that the data channel model may be expressed in any one of an index, a version, a collection of information, etc., which is not limited in the examples of the disclosure.

In an illustrative example, the data transmission requirement information includes at least one of the following: data transmission modeling information, or second node modeling information.

It should be noted that the data transmission modeling information and/or the second node modeling information are both an aggregate of information. The aggregate is an abstract concept, and a specific expression of the aggregate is not limited in the disclosure. The aggregate may be a string of codes, or a file, etc. Moreover, after the first node receives aggregate information, specific data transmission requirements and end parameter information may be recovered (or parsed out) by parsing the aggregate information.

In an illustrative example, the data transmission requirement information includes at least one of the following: first index information; first version information; or a collection of information.

In an illustrative example, after the data transmission requirement information transmitted from the second node is received by the first node, the method further includes: when the data transmission requirement information is first index information and/or first version information, data transmission modeling information and/or second node modeling information corresponding to the first index information and/or the first version information is found from locally stored information by the first node.

Optionally, in the example, a quantization standard corresponding to specific data transmission requirement is found from the locally stored information by means of data transmission modeling index information by the first node. Second node parameter information corresponding to the index information is found from the locally stored information by means of second node modeling index information by the first node.

In an illustrative example, after the data transmission requirement information transmitted from the second node is received by the first node, the method further includes: when the data transmission requirement information is the collection of information, the collection of information is decoded by the first node, and specific information of the data transmission modeling information and/or specific information included in the second node modeling information is obtained.

In an illustrative example, the data transmission modeling information includes at least one of the following: a peak transmission rate requirement of data transmission requirements; a transmission delay requirement of the data transmission requirements; a service type of the data transmission requirements; a transmission time distribution of the data transmission requirements; or a transmission rate distribution of the transmission time distribution of the data transmission requirements.

In an illustrative example, the second node modeling information includes at least one of the following: location distribution information of the second node; type information of the second node; basic information of the second node; or communication configuration information supported by the second node.

Optionally, in the example, the basic information of the second node includes, but is not limited to, hardware and software composition information of the second node.

Optionally, in the example, the network configuration information includes, but is not limited to: communication frequency domain resource information; frame structure information; transmit power information; supported radio communication protocol information; supported channel coding information; supported source coding information; a supported multiple input multiple output (MIMO) processing mode; and a supported receiver detection algorithm.

In an illustrative example, the data channel model matching the second node is determined at least according to the data transmission requirement information by the first node as further follows: the data channel model matching the second node is determined by the first node further obtaining at least one piece of the following information: radio wave propagation characteristic information; radio channel characteristic information; environmental information; and network configuration information.

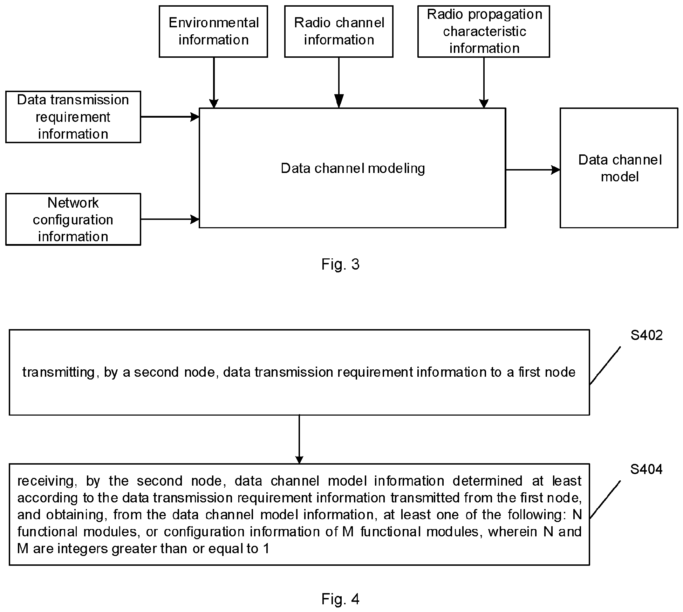

In order to help understand the above examples, description is made in conjunction with Fig. 3. Fig. 3 is a schematic diagram of an optional data channel model matching a second node according to an example of the disclosure. In Fig. 3, data channel modeling is performed according to radio wave propagation characteristic information, radio channel characteristic information, environmental information, etc., and a data channel model of the second node is determined.

In an illustrative example, the radio wave propagation characteristic information includes at least one of the following: a used frequency band; or a propagation mode.

In an illustrative example, the radio channel characteristic information includes at least one of the following: a large-scale fading characteristic; a small-scale fading characteristic; a time domain change rule of a radio channel a frequency domain change rule of the radio channel; a space domain change rule of the radio channel; or a change rule of the radio channel under a determined application scenario.

In an illustrative example, the environmental information includes at least one of the following: geographical location information of a radio communication network; topographic information of the radio communication network; weather condition information of the radio communication network; or electromagnetic interference information of the radio communication network.

Optionally, in the example, the topographic information includes, but is not limited to, artificial buildings, street distribution, pedestrian flow information, traffic flow information, etc.

Optionally, in the example, the weather condition information includes, but is not limited to, weather, temperature, humidity, etc.

In an illustrative example, the network configuration information includes at least one of the following: network topology information; network node location information; network node basic information; or network supported communication configuration information.

Optionally, in the example, the basic information of the network node includes, but is not limited to, hardware and software composition information of the network node.

Optionally, in the example, the network supported communication configuration information includes, but is not limited to: frame structure information; transmit power information; supported radio communication protocol information; supported channel coding information; supported source coding information; a supported MIMO processing mode; a supported receiver detection algorithm, etc.

Fig. 4 is a flowchart of an optional method for receiving a data channel model according to an example of the disclosure. As shown in Fig. 4, the method for transmitting data includes:
S402, data transmission requirement information is transmitted to a first node from a second node; and
S404, data channel model information determined at least according to the data transmission requirement information transmitted from the first node is received by the second node, and at least one of the following is obtained from the data channel model information: N functional modules, or configuration information of M functional modules, where N and M are integers greater than or equal to 1.

Through the above steps, data transmission requirement information is transmitted to a first node from a second node; and data channel model information determined according to the data transmission requirement information transmitted from the first node is received by the second node, and at least one of the following is obtained from the data channel model information: N functional modules, or configuration information of functional modules, where N and M are integers greater than or equal to 1. The data channel model matching the data transmission requirement information is determined at least according to the data transmission requirement information by the first node, and the data channel model matching the second node is transmitted to the second node. In the above steps, since the first node may be a network side, and the second node may be a terminal, etc., the corresponding data channel model is determined according to the data transmission requirement information of the terminal, and transmits the data channel model to the terminal. Therefore, the data channel model corresponding to the terminal can be determined according to requirements of different types of terminals, such that the problem that data transmission efficiency of the terminal is limited because the prior art lacks a data channel generation method for different types of terminals is solved.

In an illustrative example, the data transmission requirement information includes at least one of the following: data transmission modeling information, or second node modeling information.

In an illustrative example, the data transmission requirement information includes at least one of the following: first index information; first version information; or a collection of information.

In an illustrative example, after the data transmission requirement information is transmitted from the second node to the first node, the method further includes: when the data transmission requirement information is first index information and/or first version information, data transmission modeling information and/or second node modeling information corresponding to the first index information and/or the first version information is found from locally stored information by the second node.

In an illustrative example, after the data transmission requirement information is transmitted from the second node to the first node, the method further includes: when the data transmission requirement information is the collection of information, the collection of information is decoded by the second node, and specific information of the data transmission modeling information and/or specific information included in the second node modeling information is obtained.

It should be noted that the collection of information is a collection of configuration information required for generating a data channel model or a component part of the data channel model of the data transmission requirement information. Moreover, the collection of information is an abstract concept. A specific expression mode of the collection of information is not limited, and may be a string of codes or a file, which is not limited in the disclosure.

In an illustrative example, after at least one of the following is obtained from the data channel model information: N functional modules, or configuration information of M functional modules, the method further includes: the N functional modules is used by the second node; and/or the M functional modules are generated by the second node according to the configuration information of M functional modules, and the M functional modules are used in a data transmission process.

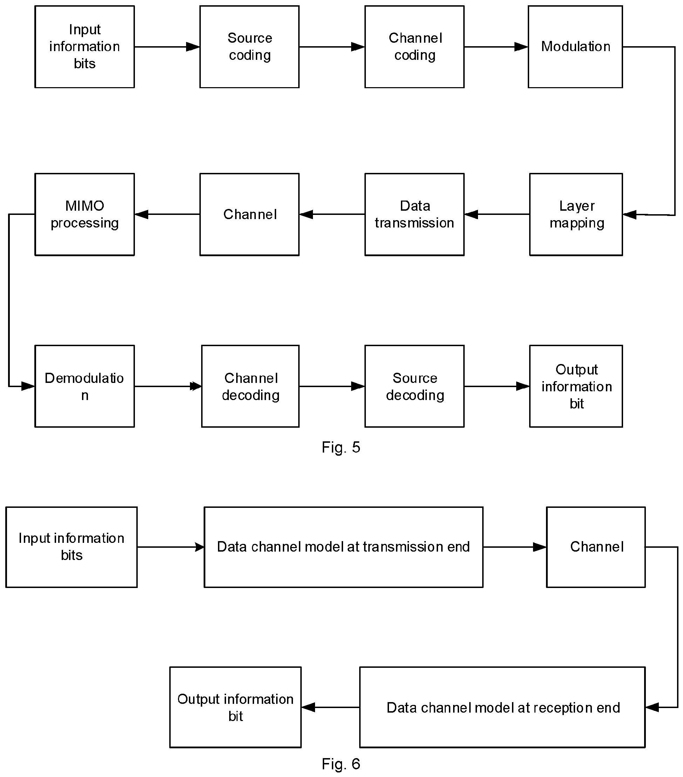

It should be noted that the disclosure divides an entire data transmission process into a plurality of components, and the function of each component is implemented through functional modules. These functional modules combine to form a complete data transmission process. As shown in Fig, 5, Fig. 5 is a schematic diagram of composition of functional modules in an optional data transmission process according to an example of the disclosure.

In an illustrative example, other functional modules required are determined by the second node in the data transmission process in one of the following manners: indicated by the first node; configured according to a local default of the second node; and determined by the second node.

### Example 1

Fig. 6 is a schematic diagram of an optional method for transmitting a data channel model according to Example 1. In Fig. 6, a second node needs to transmit uplink data as follows:
Step 1. When the second node needs to transmit uplink data, uplink data transmission requirement information is transmitted to the first node, where the uplink data transmission requirement information includes uplink data transmission modeling information and second node modeling information. In the example, the uplink data transmission requirement information is first index information and first version information.
Step 2. After the uplink data transmission requirement information transmitted from the second node is received by the first node, corresponding uplink data transmission modeling information and the second node modeling information are found from a local Al server through the first index information.

In the implementation, the entire process of uplink data transmission is divided into a plurality of components, for example, including source coding and decoding, modulation and demodulation, channel coding and decoding, layer mapping, data transmission and reception, and MIMO processing. One or more models for combinations of any one or more of the components are established by the Al server, different combinations are searched for through index numbers, and models corresponding to combinations satisfying different requirements are further searched for through different version information.

In the embodiment, a combination indicated by the first index information is source coding and decoding, modulation and demodulation, channel coding and decoding, layer mapping, data transmission and reception, and MIMO processing in uplink data transmission. Then, a specific model is obtained through the first version information. The model corresponds to the determined information such as a peak transmission rate requirement of data transmission requirements, a transmission delay requirement of the data transmission requirements, a service type of the data transmission requirements, a transmission time distribution of the data transmission requirements, etc.

In the implementation, modeling information of the second node is also stored in the Al server. Terminals are divided into different types according to different hardware and/or software supported. Terminals supporting same hardware and/or software but having different versions are divided into different types of terminals. Hardware and software supported by a terminal are determined according to the first index information, and hardware versions and software versions supported by the terminal are further determined according to the first version information.

An uplink data channel model matching the requirement information is generated by the first node according to the requirement information and through analysis and calculation based on Al techniques. The uplink data channel model is transmitted from the first node to the second node. The uplink data channel model may be represented by second index information and/or second version information and/or a collection of information. In the example, the uplink data channel model is indicated by the second index information.

Step 3. The uplink data channel model is received by the second node, second index information is obtained through decoding, and a corresponding uplink data channel model is found from an Al server or other known nodes through the second index information and is downloaded locally, such that "data channel model at transmission end" is obtained as shown in Fig. 6. Whether "data channel model at reception end" is transmitted to the second node through the uplink data channel model is determined by the first node. It should be noted that the transmission end can be understood as a terminal side, and the reception end can be understood as a network side. That is to say, the terminal side can know the data channel model at the terminal side, and the network side decides whether to transmit the data channel model of the network side to the terminal side.

Step 4. Input information bits to be transmitted are transmitted into the "data channel model at transmission end" by the second node and then are transmitted through generated data of the "data channel model at transmission end".

Step 5. Received data pass through the "data channel model at reception end" by means of the reception end, and an output information bit is received.

### Example 2

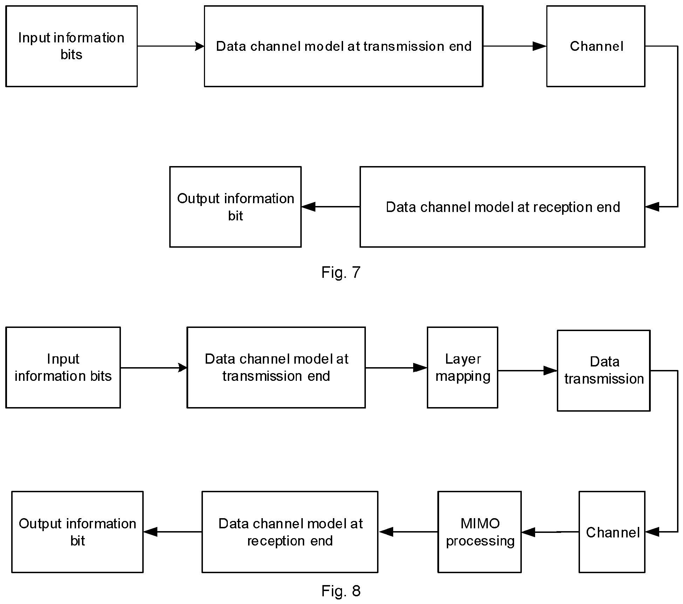

Fig. 7 is a schematic diagram of an optional method for transmitting a data channel model according to Example 2. In Fig. 7, a second node needs to receive downlink data as follows:
Step 1. When the second node needs to transmit downlink data, downlink data transmission requirement information is transmitted to the first node, where the downlink data transmission requirement information includes downlink data transmission modeling information and second node modeling information. In the example, the downlink data transmission requirement information is a collection of information.
Step 2. After the downlink data transmission requirement information transmitted from the second node is received by the first node, a downlink data channel model matching the requirement information is generated by the first node according to the requirement information and through analysis and calculation based on Al techniques. The downlink data channel model is transmitted from the first node to the second node. In the example, the downlink data channel model is indicated by the first index information.
Step 3. The downlink data channel model is received by the second node, first index information is obtained through decoding, and a corresponding downlink data channel model is found from an Al server or other known nodes through the first index information and is downloaded locally, such that "data channel model at reception end" is obtained as shown in the following figure. Whether "data channel model at transmission end" is transmitted to the second node through the downlink data channel model is determined by the first node.
Step 4. Input information bits to be transmitted are transmitted into the "data channel model at transmission end" by a base station side and then are transmitted through generated data of the "data channel model at transmission end".
Step 5. Received data pass through the "data channel model at reception end" by means of the second node, and an output information bit is received.

### Example 3

Fig. 8 is a schematic diagram of an optional method for transmitting a data channel model according to Example 3. In Fig. 8, a second node needs to transmit uplink data as follows:
Step 1. When the second node needs to transmit uplink data, uplink data transmission requirement information is transmitted to the first node, where the uplink data transmission requirement information includes uplink data transmission modeling information and second node modeling information.
Step 2. After the uplink data transmission requirement information transmitted from the second node is received by the first node, an uplink data channel model matching the requirement information is generated by the first node according to the requirement information and through analysis and calculation. The uplink data channel model is transmitted from the first node to the second node.
Step 3. The uplink data channel model is received by the second node, and "data channel model at transmission end" is obtained by decoding or parsing the uplink data channel model as shown in the following figure. The "data channel model at transmission end" mainly implements functions of coding and modulation. For "layer mapping" and "data transmission", a processing mode adopted is still determined by the second node. Moreover, whether "data channel model at reception end" is transmitted to the second node through the uplink data channel model is determined by the first node.
Step 4. Input information bits to be transmitted are transmitted into the "data channel model at transmission end" by the second node and then are transmitted through generated data of the "data channel model at transmission end", "layer mapping" and "data transmission".
Step 5. Received data pass through an "MIMO processing" module and the "data channel model at reception end" by means of the reception end, and an output information bit is received.

### Example 4

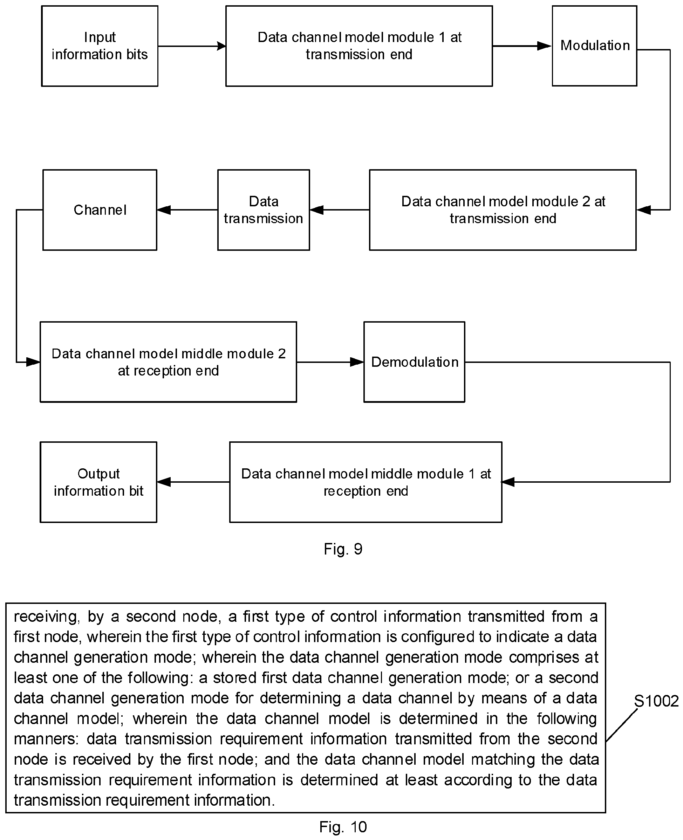

Fig. 9 is a schematic diagram of an optional method for transmitting a data channel model according to Example 4. In Fig. 9, a second node needs to transmit uplink data as follows:
Step 1. When the second node needs to transmit uplink data, uplink data transmission requirement information is transmitted to the first node, where the uplink data transmission requirement information includes uplink data transmission modeling information and second node modeling information.
Step 2. After the uplink data transmission requirement information transmitted from the second node is received by the first node, an uplink data channel model matching the requirement information is generated by the first node according to the requirement information and through analysis and calculation. The uplink data channel model is transmitted from the first node to the second node.
Step 3. The uplink data channel model is received by the second node, and "data channel model middle module 1 at transmission end" and "data channel model middle module 2 at transmission end" are obtained by decoding or parsing the uplink data channel model as shown in the following figure. The "data channel model middle module 1 at transmission end" mainly implements a function of coding. The "data channel model middle module 2 at transmission end" mainly implements a function of MIMO. For "data transmission", a processing mode adopted is still determined by the second node. Whether "data channel model middle module 1 at reception end" and "data channel model middle module 2 at reception end" are transmitted to the second node through the uplink data channel model is determined by the first node.
Step 4. Input information bits to be transmitted are transmitted into the "data channel model middle module 1 at transmission end" by the second node and then pass through generated data of the "data channel model middle module 1 at transmission end" and a "modulation" module, and generated data are transmitted through the "data channel model middle module 2 at transmission end" and a "data transmission" model.
Step 5. Received data pass through the "data channel model middle module 2 at reception end" by means of the reception end, and pass through a "demodulation" module and the "data channel model middle module 1 at reception end", and an output information bit is received.

Fig. 10 is a flowchart of an optional method for transmitting information according to an example of the disclosure. As shown in Fig. 10, the method for transmitting data includes:
S1002, a first type of control information transmitted from a first node is received by a second node, where the first type of control information is configured to indicate a data channel generation mode. The data channel generation mode includes at least one of the following: a stored first data channel generation mode; and a second data channel generation mode for determining a data channel by means of a data channel model. The data channel model is determined in the following manners: data transmission requirement information transmitted from the second node is received by the first node; and the data channel model matching the data transmission requirement information is determined at least according to the data transmission requirement information.

Through the above step, the first type of control information transmitted from the first node is received by the second node, where the first type of control information is configured to indicate the data channel generation mode. The data channel generation mode includes at least one of the following: a stored first data channel generation mode; or a second data channel generation mode for determining a data channel by means of a data channel model. The data channel model is determined in the following manners: data transmission requirement information transmitted from the second node is received by the first node; and the data channel model matching the data transmission requirement information is determined at least according to the data transmission requirement information. In the above step, since the first node may be a network side, and the second node may be a terminal, etc., the corresponding data channel model is determined according to the data transmission requirement information of the terminal, and a second data channel generation mode of the data channel is determined through the data channel model. Therefore, the data channel generation mode corresponding to the terminal can be determined according to requirements of different types of terminals, such that the problem that data transmission efficiency of the terminal is limited because the prior art lacks a data channel model generation method for different types of terminals is solved.

Optionally, in an illustrative example, the data channel generation mode may further include an existing data channel generation mode, for example, a generation mode of a physical downlink shared channel (PDSCH) scheduled through a physical downlink control channel (PDCCH) in a long term evolution (LTE)/NR system.

Optionally, in an illustrative example, when the second node detects no first type of control information, it is confirmed that the existing or stored first data channel generation mode is adopted.

In an illustrative example, in a case that the data channel generation manner indicated by the first type of control information is the first data channel generation manner, a second type of control information is detected by the second node. Data transmission on a first type of data channel is completed according to scheduling information of the first type of data channel carried in the second type of control information, after the second type of control information is detected by the second node.

It should be noted that a process of data transmission includes two types, where the first type is transmission of uplink data by the terminal, and the second type is reception of downlink data by the terminal. In the examples of the disclosure, the above two types of processes of data transmission are collectively referred to as data transmission.

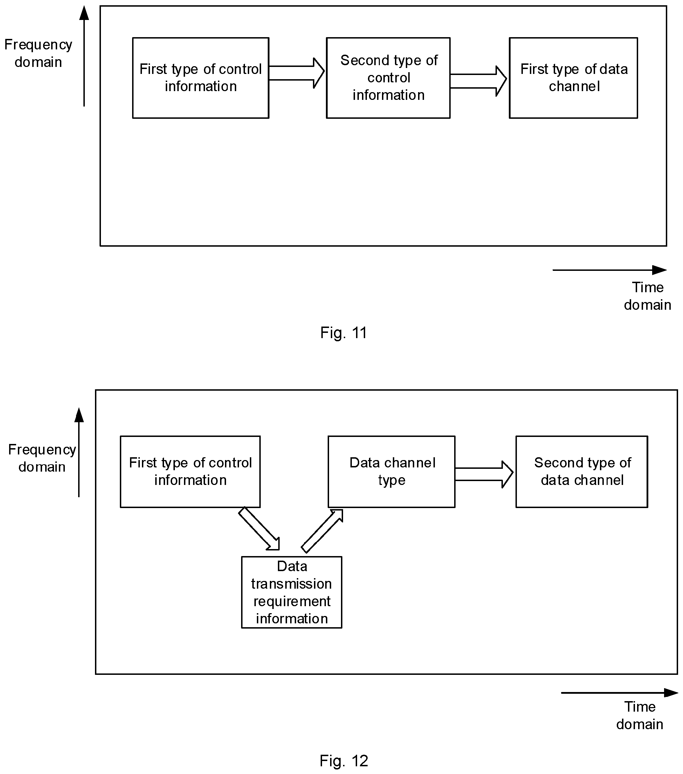

In order to help understand the above examples, description is made in conjunction with Fig. 11. Fig. 11 is a schematic diagram of an optional frame structure according to an example of the disclosure. In Fig. 11, when the first type of control information indicates that the data channel generation mode is the first data channel generation mode, the second type of control information is further detected by the second node. The second type of control information is carried in the PDCCH and can be detected in a blind manner. After the second type of control information is detected by the second node, data transmission or reception on the first type of data channel according to the scheduling information of the first type of data channel.

In an illustrative example, in a case that the data channel generation manner indicated by the first type of control information is the second data channel generation manner, data transmission on the second data channel is completed according to the data channel model.

Further, a method for determining a data channel model may adopt any one of the methods in the above examples. The data channel generation mode indicated in the first type of control information may be at least one of the following: a stored first data channel generation mode; or a second data channel generation mode for determining a data channel by means of a data channel model.

In order to help understand the above examples, description is made in conjunction with Fig. 12. Fig. 12 is a second schematic diagram of an optional frame structure according to an example of the disclosure. In Fig. 12, the first type of control information indicates that the data channel generation mode is the second data channel generation mode. In this case, data transmission on a second data channel is completed according to the data channel model.

Through the description of embodiments, those skilled in the art can clearly understand that the method according to the above example may be implemented in combination of software and a necessary general-purpose hardware platform and may also be certainly implemented through hardware. However, the former is a preferred embodiment in many cases. Based on such understanding, the technical solutions in essence of the disclosure or the part that contributes to the prior art can be embodied in the form of software products. The computer software product is stored in a storage medium (such as a read-only memory (ROM)/a random access memory (RAM), a magnetic disk, or an optical disk), and includes several instructions to make a second node device (such as a mobile phone, a computer, a server, or a network device) execute the method in each example of the disclosure.

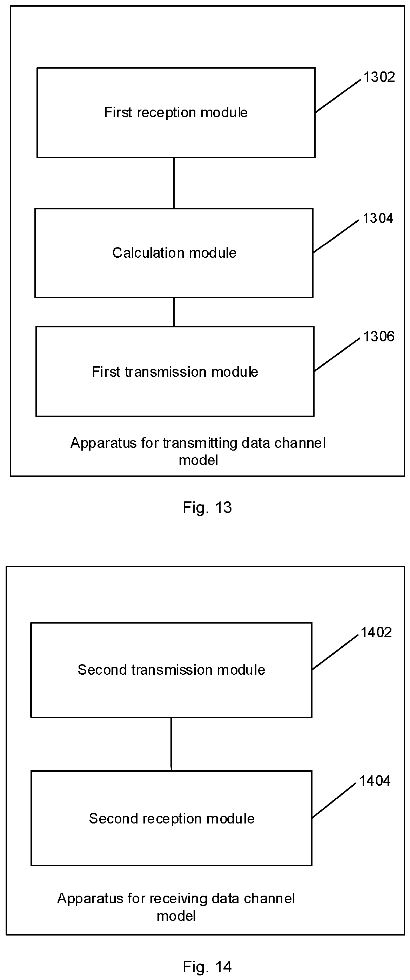

Fig. 13 is a structural block diagram of an optional apparatus for transmitting a data channel model according to an example of the disclosure. As shown in Fig. 13, the apparatus for transmitting data includes:
a first reception module 1302 configured to receive data transmission requirement information transmitted from a second node;
a calculation module 1304 configured to determine a data channel model matching the data transmission requirement information at least according to the data transmission requirement information; and
a first transmission module 1306 configured to transmit the data channel model matching the second node to the second node.

Through the above apparatus, the first node receives the data transmission requirement information transmitted from the second node; the first node determines the data channel model matching the data transmission requirement information at least according to the data transmission requirement information, and transmits the data channel model matching the second node to the second node. In the above apparatus, since the first node may be a network side, and the second node may be a terminal, etc., the corresponding data channel model is determined according to the data transmission requirement information of the terminal, and transmits the data channel model to the terminal. Therefore, the data channel model corresponding to the terminal can be determined according to requirements of different types of terminals, such that the problem that data transmission efficiency of the terminal is limited because the prior art lacks a data channel model generation method for different types of terminals is solved.

In an illustrative example, the data transmission requirement information includes at least one of the following: data transmission modeling information, or second node modeling information.

In an illustrative example, the data transmission requirement information includes at least one of the following: first index information; first version information; or a collection of information.

In an illustrative example, after the data transmission requirement information transmitted from the second node is received, the method further includes: when the data transmission requirement information is first index information and/or first version information, data transmission modeling information and/or second node modeling information corresponding to the first index information and/or the first version information is found from locally stored information by the first node.

In an illustrative example, after the data transmission requirement information transmitted from the second node is received, when the data transmission requirement information is the collection of information, the first reception module 1302 is further configured to decode, by the first node, the collection of information, and obtain specific information of the data transmission modeling information and/or specific information included in the second node modeling information.

In an illustrative example, the data transmission modeling information includes at least one of the following: a peak transmission rate requirement of data transmission requirements; a transmission delay requirement of the data transmission requirements; a service type of the data transmission requirements; a transmission time distribution of the data transmission requirements; and a transmission rate distribution of the transmission time distribution of the data transmission requirements.

In an illustrative example, the second node modeling information includes at least one of the following: location distribution information of the second node; type information of the second node; basic information of the second node; or communication configuration information supported by the second node.

In an illustrative example, the calculation module 1304 is further configured to determine the data channel model matching the second node by obtaining at least one piece of the following information: radio wave propagation characteristic information; radio channel characteristic information; environmental information; and network configuration information.

In an illustrative example, the radio wave propagation characteristic information includes at least one of the following: a used frequency band; or a propagation mode.

In an illustrative example, the radio channel characteristic information includes at least one of the following: a large-scale fading characteristic; a small-scale fading characteristic; a time domain change rule of a radio channel a frequency domain change rule of the radio channel; a space domain change rule of the radio channel; or a change rule of the radio channel under a determined application scenario.

In an illustrative example, the environmental information includes at least one of the following: geographical location information of a radio communication network; topographic information of the radio communication network; weather condition information of the radio communication network; or electromagnetic interference information of the radio communication network.

In an illustrative example, the network configuration information includes at least one of the following: network topology information; network node location information; network node basic information; or network supported communication configuration information.

Fig. 14 is a structural block diagram of an optional apparatus for receiving a data channel model according to an example of the disclosure. As shown in Fig. 14, the apparatus for receiving data includes:
a second transmission module 1402 configured to transmit data transmission requirement information to a first node; and
a second reception module 1404 configured to receive data channel model information determined at least according to the data transmission requirement information transmitted from the first node, and obtain, from the data channel model information, at least one of the following: N functional modules, or configuration information of M functional modules, where N and M are integers greater than or equal to 1.

Through the above apparatus, data transmission requirement information is transmitted to a first node from a second node; and data channel model information determined according to the data transmission requirement information transmitted from the first node is received by the second node, and at least one of the following is obtained from the data channel model information: N functional modules, or configuration information of M functional modules. The data channel model matching the data transmission requirement information is determined at least according to the data transmission requirement information by the first node, and the data channel model matching the second node is transmitted to the second node. In the above apparatus, since the first node may be a network side, and the second node may be a terminal, etc., the corresponding data channel model is determined according to the data transmission requirement information of the terminal, and transmits the data channel model to the terminal. Therefore, the data channel model corresponding to the terminal can be determined according to requirements of different types of terminals, such that the problem that data transmission efficiency of the terminal is limited because the prior art lacks a data channel model generation method for different types of terminals is solved.

In an illustrative example, the data transmission requirement information includes at least one of the following: data transmission modeling information, or second node modeling information.

In an illustrative example, the data transmission requirement information includes at least one of the following: first index information; first version information; or a collection of information.

In an illustrative example, when the data transmission requirement information is first index information and/or first version information, the second reception module 1404 is further configured to find data transmission modeling information and/or second node modeling information corresponding to the first index information and/or the first version information from locally stored information by the second node.

In an illustrative example, when the data transmission requirement information is the collection of information, the second reception module 1404 is further configured to decode, by the second node, the collection of information, and obtain specific information of the data transmission modeling information and/or specific information included in the second node modeling information.

In an illustrative example, after at least one of the following is obtained from the data channel model information: N functional modules, or configuration information of M functional modules, the second reception module 1404 is further configured to use the N functional modules; and/or generate, by the second node, the M functional modules according to the configuration information of M functional modules, and use the M functional modules in a data transmission process.

In an illustrative example, the second reception module 1404 is further configured to determine other functional modules required by the second node in the data transmission process in one of the following manners: indicated by the first node; configured according to a local default of the second node; and determined by the second node.

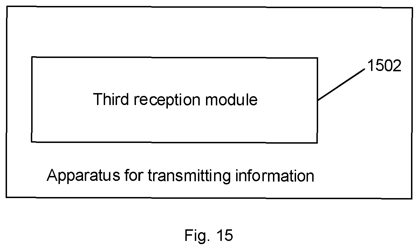

Fig. 15 is a structural block diagram of an optional apparatus for transmitting information according to an example of the disclosure. As shown in Fig. 15, the apparatus for transmitting data includes:
a third reception module 1502 configured to receive a first type of control information transmitted from a first node, where the first type of control information is configured to indicate a data channel generation mode; where
the data channel generation mode includes at least one of the following:
   a stored first data channel generation mode; and
   a second data channel generation mode; and
   the data channel model is determined in the following manners: data transmission requirement information transmitted from the second node is received by the first node; and the data channel model matching the data transmission requirement information is determined at least according to the data transmission requirement information.

Through the above apparatus, the first type of control information transmitted from the first node is received by the second node, where the first type of control information is configured to indicate the data channel generation mode. The data channel generation mode includes at least one of the following: a stored first data channel generation mode; or a second data channel generation mode for determining a data channel by means of a data channel model. The data channel model is determined in the following manners: data transmission requirement information transmitted from the second node is received by the first node; and the data channel model matching the data transmission requirement information is determined at least according to the data transmission requirement information. In the above apparatus, since the first node may be a network side, and the second node may be a terminal, etc., the corresponding data channel model is determined according to the data transmission requirement information of the terminal, and a second data channel generation mode of the data channel is determined through the data channel model. Therefore, the data channel generation mode corresponding to the terminal can be determined according to requirements of different types of terminals, such that the problem that data transmission efficiency of the terminal is limited because the prior art lacks a data channel model generation method for different types of terminals is solved.

In an illustrative example, the third reception module 1502 is further configured to detect a second type of control information by the second node when the first type of control information indicates that the data channel generation mode is the first data channel generation mode; and complete data transmission on a first type of data channel carried in the second type of control information according to scheduling information of the first type of data channel after the second type of control information is detected by the second node.

In an illustrative example, the third reception module 1502 is further configured to complete data transmission on a second data channel according to the data channel model when the first type of control information indicates that the data channel generation mode is the second data channel generation mode.

The examples of the disclosure further provide a storage medium. The storage medium stores a computer program. The computer program is configured to execute steps of any one of the above method examples when run.

Optionally, in the example, the storage medium may be configured to store a computer program for executing the following steps:
S1, data transmission requirement information transmitted from a second node is received by a first node;
S2, a data channel model matching the data transmission requirement information is determined at least according to the data transmission requirement information by the first node; and
S3, the data channel model matching the second node is transmitted to the second node.

Optionally, in another example, the storage medium may be configured to store a computer program for executing the following steps:
S1, data transmission requirement information transmitted from a second node is received by a first node; and
S2, data channel model information determined at least according to the data transmission requirement information transmitted from the first node is received by the second node, and at least one of the following is obtained from the data channel model information: N functional modules, or configuration information of M functional modules, where N and M are integers greater than or equal to 1.

Optionally, in yet another example, the storage medium may be configured to store a computer program for executing the following steps:
S1, a first type of control information transmitted from a first node is received by a second node, where the first type of control information is configured to indicate a data channel generation mode; where
the data channel generation mode includes at least one of the following:
   a stored first data channel generation mode; or
   a second data channel generation mode for determining a data channel by means of a data channel model; where
   the data channel model is determined in the following manners: data transmission requirement information transmitted from the second node is received by the first node; and the data channel model matching the data transmission requirement information is determined at least according to the data transmission requirement information.

An electronic apparatus is further provided in an example of the disclosure. The electronic apparatus includes a memory and a processor, where the memory stores a computer program, and the processor is configured to execute steps of any method example described above when running the computer program.

Optionally, in the example, through the computer program, the processor may be configured to execute the following steps:
S1, data transmission requirement information transmitted from a second node is received by a first node;
S2, a data channel model matching the data transmission requirement information is determined at least according to the data transmission requirement information by the first node; and
S3, the data channel model matching the second node is transmitted to the second node.

Optionally, in yet another example, through the computer program, the processor may be configured to execute the following steps:
S1, data transmission requirement information transmitted from a second node is received by a first node; and
S2, data channel model information determined at least according to the data transmission requirement information transmitted from the first node is received by the second node, and at least one of the following is obtained from the data channel model information: N functional modules, or configuration information of M functional modules, where N and M are integers greater than or equal to 1.

Optionally, in still another example, through the computer program, the processor may be configured to execute the following step:
S1, a first type of control information transmitted from a first node is received by a second node, where the first type of control information is configured to indicate a data channel generation mode; where
the data channel generation mode includes at least one of the following:
   a stored first data channel generation mode; or
   a second data channel generation mode for determining a data channel by means of a data channel model; where
   the data channel model is determined in the following manners: data transmission requirement information transmitted from the second node is received by the first node; and the data channel model matching the data transmission requirement information is determined at least according to the data transmission requirement information.

In an illustrative example, the electronic apparatus may further include a transmission device and an input/output device, where the transmission device and the input/output device are connected to the processor.

Reference may be made to the instances described in the above examples and the illustrative embodiments for the specific instances in the example, which will not be repeated in the example.

Apparently, those skilled in the art should understand that all the modules or steps above of the disclosure can be implemented through a general-purpose computation apparatus, centralized on a single computation apparatus or distributed over a network composed of a plurality of computation apparatuses, and implemented through program codes executable by the computation apparatus. Therefore, the modules or steps can be stored in a storage apparatus to be executed by the computation apparatus. In some cases, the steps shown or described can be executed in a different order from herein. Alternatively, the modules or the steps can be implemented by fabricating them into respective integrated circuit modules or fabricating multiple ones of them into one integrated circuit module. In this way, the disclosure is not limited to any particular combination of hardware and software.

What are described above are merely examples of the disclosure and are not intended to limit the disclosure. Those skilled in the art can make various modifications and variations to the disclosure. Any modifications, equivalent replacements, improvements, etc. made within the principles of the disclosure should fall within the scope of protection of the disclosure.

## Claims

1. A method for transmitting a data channel model, comprising:
receiving, by a first node, data transmission requirement information transmitted from a second node;
determining, by the first node, a data channel model matching the data transmission requirement information at least according to the data transmission requirement information; and
transmitting the data channel model matching the second node to the second node.

2. The method according to claim 1, wherein the data transmission requirement information comprises at least one of the following: data transmission modeling information, or second node modeling information.

3. The method according to claim 1, wherein the data transmission requirement information comprises at least one of the following:
first index information,
first version information, or
a collection of information.

4. The method according to claim 3, wherein after the receiving, by a first node, data transmission requirement information transmitted from a second node, the method further comprises:
in a case that the data transmission requirement information is the first index information and/or first version information,
finding, by the first node, data transmission modeling information and/or second node modeling information corresponding to the first index information and/or the first version information from locally stored information.

5. The method according to claim 3, wherein after the receiving, by a first node, data transmission requirement information transmitted from a second node, the method further comprises:
in a case that the data transmission requirement information is the collection of information,
decoding, by the first node, the collection of information, and obtaining specific information of the data transmission modeling information and/or specific information comprised in the second node modeling information.

6. The method according to claim 2, wherein the data transmission modeling information comprises at least one of the following:
a peak transmission rate requirement of data transmission requirements,
a transmission delay requirement of the data transmission requirements,
a service type of the data transmission requirements,
a transmission time distribution of the data transmission requirements, or
a transmission rate distribution of the transmission time distribution of the data transmission requirements.

7. The method according to claim 2, wherein the second node modeling information comprises at least one of the following:
location distribution information of the second node,
type information of the second node,
basic information of the second node, or
communication configuration information supported by the second node.

8. The method according to claim 1, wherein the determining, by the first node, a data channel model matching the second node at least according to the data transmission requirement information further comprises:
determining, by the first node, the data channel model matching the second node by further obtaining at least one of the following information:
radio wave propagation characteristic information,
radio channel characteristic information,
environmental information, or
network configuration information.

9. The method according to claim 8, wherein the radio wave propagation characteristic information comprises at least one of the following:
a used frequency band, or a propagation mode.

10. The method according to claim 8, wherein the radio channel characteristic information comprises at least one of the following:
a large-scale fading characteristic,
a small-scale fading characteristic,
a time domain change rule of a radio channel,
a frequency domain change rule of the radio channel,
a space domain change rule of the radio channel, or
a change rule of the radio channel under a determined application scenario.

11. The method according to claim 8, wherein the environmental information comprises at least one of the following:
geographical location information of a radio communication network,
topographic information of the radio communication network,
weather condition information of the radio communication network, or
electromagnetic interference information of the radio communication network.

12. The method according to claim 8, wherein the network configuration information comprises at least one of the following:
network topology information,
network node location information,
network node basic information, or
network supported communication configuration information.

13. A method for receiving a data channel model, comprising:
transmitting, by a second node, data transmission requirement information to a first node; and
receiving, by the second node, data channel model information determined at least according to the data transmission requirement information transmitted from the first node, and obtaining, from the data channel model information, at least one of the following: N functional modules, or configuration information of M functional modules, wherein N and M are integers greater than or equal to 1.

14. The method according to claim 13, wherein the data transmission requirement information comprises at least one of the following: data transmission modeling information, or second node modeling information.

15. The method according to claim 14, wherein the data transmission requirement information comprises at least one of the following:
first index information,
first version information, or
a collection of information.

16. The method according to claim 15, wherein after the transmitting, by a second node, data transmission requirement information to a first node, the method further comprises:
in a case that the data transmission requirement information is the first index information and/or first version information,
finding, by the second node, data transmission modeling information and/or second node modeling information corresponding to the first index information and/or the first version information from locally stored information.

17. The method according to claim 15, wherein after the transmitting, by a second node, data transmission requirement information to a first node, the method further comprises:
in a case that the data transmission requirement information is the collection of information,
decoding, by the second node, the collection of information, and obtaining specific information of the data transmission modeling information and/or specific information comprised in the second node modeling information.

18. The method according to claim 13, wherein after the obtaining, from the data channel model information, at least one of the following: N functional modules, and configuration information of M functional modules, the method further comprises:
using, by the second node, the N functional modules in a data transmission process;
and/or
generating, by the second node, the M functional modules according to the configuration information of M functional modules, and using the M functional modules in a data transmission process.

19. The method according to claim 13, wherein other functional modules required by the second node in the data transmission process are determined in one of the following manners:
indicated by the first node,
configured according to a local default of the second node, or
determined by the second node.

20. A method for transmitting information, comprising:
receiving, by a second node, a first type of control information transmitted from a first node, wherein the first type of control information is configured to indicate a data channel generation mode; wherein
the data channel generation mode comprises at least one of the following:
a stored first data channel generation mode, or
a second data channel generation mode for determining a data channel by means of a data channel model; wherein
the data channel model is determined in the following manners: data transmission requirement information transmitted from the second node is received by the first node; and the data channel model matching the data transmission requirement information is determined at least according to the data transmission requirement information.

21. The method according to claim 20, wherein
in a case that the data channel generation manner indicated by the first type of control information is the first data channel generation manner, a second type of control information is detected by the second node; and
data transmission on a first type of data channel is completed according to scheduling information of the first type of data channel carried in the second type of control information, after the second type of control information is detected by the second node.

22. The method according to claim 20, wherein
in a case that the data channel generation manner indicated by the first type of control information is the second data channel generation manner, data transmission on the second data channel is completed according to the data channel model.

23. An apparatus for transmitting a data channel model, applied to a first node, comprising:
a first reception module configured to receive data transmission requirement information transmitted from a second node;
a calculation module configured to determine a data channel model matching the data transmission requirement information at least according to the data transmission requirement information; and
a first transmission module configured to transmit the data channel model matching the second node to the second node.

24. An apparatus for receiving a data channel model, applied to a second node, comprising:
a second transmission module configured to transmit data transmission requirement information to a first node; and
a second reception module configured to receive the data channel model determined according to the data transmission requirement information transmitted from the first node, and obtain, from the data channel model, at least one of the following: N functional modules in data transmission, or configuration information of M functional modules in data transmission.

25. An apparatus for transmitting information, comprising:
a third reception module configured to receive a first type of control information transmitted from a first node, wherein the first type of control information is configured to indicate a data channel generation mode; wherein
the data channel generation mode comprises at least one of the following:
a stored first data channel generation mode, or
a second data channel generation mode for determining a data channel by means of a data channel model; wherein
the data channel model is determined in the following manners: data transmission requirement information transmitted from the second node is received by the first node; and the data channel model matching the data transmission requirement information is determined at least according to the data transmission requirement information.

26. A computer-readable storage medium, storing a computer program, wherein the computer program is configured to, when executed by a processor, implement the method according to any one of claims 1-12, the method according to any one of claims 13-19, or the method according to any one of claims 20-22.

27. An electronic apparatus, comprising a memory and a processor, wherein the memory stores a computer program, and the processor is configured to execute the computer program to implement the method according to any one of claims 1-12, the method according to any one of claims 13-19, or the method according to any one of claims 20-22.
